# EUROPÄISCHE PATENTANMELDUNG

(11) **EP 1 440 839 A2**
(43) Veröffentlichungstag der Anmeldung: **28.07.2004**
(21) Anmeldenummer: 03027594.5
(22) Anmeldetag: 02.12.2003
(51) Int. Cl.: B60N 2/24

(54) **Fuss für einen Fahrgastsitz**

(30) Priorität: 24.01.2003 DE 10302941
(71) Anmelder: Vogelsitze GmbH, 76228 Karlsruhe (DE)
(72) Erfinder: Bilfinger, Jan, 76228 Karlsruhe (DE)
(74) Vertreter: Dimmerling, Heinz, Dipl.-Ing.

(57) **Zusammenfassung**

Ein Fuß für einen Fahrgastsitz eines Personenbeförderungsfahrzeugs, insbesondere eines Busses, mittels welchem das Sitzuntergestell des Fahrgastsitzes auf den Boden des Personenbeförderungsfahrzeugs befestigbar ist, mit einem Fußprofil (1), welches sich im eingebauten Zustand etwa senkrecht zwischen Sitzuntergestell und Boden erstreckt, und an welcher an zwei gegenüberliegenden Seiten Fußplatten (2,3) angebracht sind, zur Befestigung des Fußes am Boden beziehungsweise zur Befestigung des Sitzuntergestells am Fuß, ist dadurch gekennzeichnet, daß wenigstens an einer Seite, an der keine Fußplatte angeordnet ist, ein Verstärkungselement (4) angeordnet ist, welches sich zwischen den Fußplatten (2,3) erstreckt.

## Beschreibung

Die Erfindung betrifft einen Fuß nach dem Oberbegriff des Anspruchs 1, für einen Fahrgastsitz eines Personenbeförderungsfahrzeuges, insbesondere eines Busses, mittels welchem das Sitzuntergestell des Fahrgastsitzes auf dem Boden des Personenbeförderungsfahrzeugs befestigbar ist, mit einem Fußprofil, welches sich im eingebauten Zustand etwa senkrecht zwischen Sitzuntergestell und Boden erstreckt, und an welchem an zwei gegenüberliegenden Seiten Fußplatten angebracht sind, zur Befestigung des Fußes am Boden beziehungsweise zur Befestigung des Sitzuntergestells am Fuß.

Ein derartiger Fuß ist im Stand der Technik hinlänglich bekannt und wird regelmäßig zur Befestigung von Fahrgastsitzen in Bussen eingesetzt. Mittels des bekannten Fußes lassen sich Fahrgastsitze auf einfache Weise zuverlässig auf dem Boden eines Busses befestigen. Mittels des bekannten Fußes werden sowohl Fahrgastsitze ohne Sicherheitsgurt als auch Fahrgastsitze mit Sicherheitsgurt befestigt. Da die Kräfte, die beispielsweise bei einem Aufprall des Busses bei einem Fahrgastsitz mit Sicherheitsgurt in den Fahrgastsitz eingeleitet werden sehr groß sind, sind die Füße für Fahrgastsitze mit Sicherheitsgurt insbesondere mit einem Dreipunkt-Sicherheitsgurt massiver ausgebildet als Füße für Fahrgastsitze ohne Sicherheitsgurt.

Dies ist sehr nachteilig, da sich hierdurch das Gewicht des Busses vergrößert, was sich nachteilig auf die Betriebskosten des Busses auswirkt. Zum anderen ist es erforderlich, unterschiedliche Füße herzustellen und bereitzuhalten, was sich nachteilig auf die Herstellungskosten beziehungsweise Lagerkosten auswirkt.

Es ist Aufgabe der Erfindung, einen eingangs genannten Fuß derart auszubilden, daß er bei gleicher Stabilität ein geringeres Gewicht hat.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fuß für einen Fahrgastsitz eines Personenbeförderungsfahrzeugs, insbesondere eines Busses, mittels welchem das Sitzuntergestell des Fahrgastsitzes auf den Boden des Personenbeförderungsfahrzeugs befestigbar ist, mit einem Fußprofil, welches sich im eingebauten Zustand etwa senkrecht zwischen Sitzuntergestell und Boden erstreckt, und an welchem an zwei gegenüberliegenden Seiten Fußplatten angebracht sind, zur Befestigung des Fußes am Boden beziehungsweise zur Befestigung des Sitzuntergestells am Fuß, dadurch gekennzeichnet, daß wenigstens an einer Seite, an der keine Fußplatte angeordnet ist, ein Verstärkungselement angeordnet ist, welches sich zwischen den Fußplatten erstreckt.

Dadurch, daß das Fußprofil wenigstens an einer Seite, an der keine Fußplatte angeordnet ist, ein Verstärkungselement aufweist, welches sich zwischen den Fußplatten erstreckt, erhält der Fuß eine sehr hohe Stabilität. Dies hat in vorteilhafter Weise zur Folge, daß ein Fuß, welcher zur Befestigung eines Fahrgastsitzes mit Sicherheitsgurt, insbesondere mit einem Dreipunkt-Sicherheitsgurt vorgesehen ist, insgesamt nicht mehr sehr massiv ausgebildet sein muß. Durch eine entsprechende Dimensionierung des Verstärkungselements kann erreicht werden, daß das Fußprofil und die beiden Fußplatten eines Fußes für einen Fahrgastsitz mit beispielsweise einem Dreipunkt-Sicherheitsgurt so ausgebildet sind, wie bei einem Fuß für einen Fahrgastsitz ohne Sicherheitsgurt. Die für einen Fahrgastsitz mit Sicherheitsgurt erforderliche erhöhte Stabilität wird durch das Verstärkungselement erreicht. Sofem es erforderlich sein sollte, kann an beiden Seiten des Fußprofils, an der keine Fußplatten angeordnet sind, ein Verstärkungselement angeordnet sein.

Besonders vorteilhaft ist es, wenn das Verstärkungselement fest mit den Fußplatten verbunden ist. Hierdurch wird eine sehr hohe Stabilität des Fußes erreicht.

Die Stabilität des Fußes kann aber noch dadurch verbessert werden, daß das Verstärkungselement auch fest mit dem Fußprofil verbunden ist, wie dies bei einer weiteren besonderen Ausführungsform der Erfindung vorgesehen ist.

Als sehr vorteilhaft hat sich ein Verstärkungselement herausgestellt, welches winkelprofilförmig ausgebildet ist. Ein derartiges Verstärkungselement kann aus einem Blech bestehen, welches abgewinkelt ist. Hierdurch ist es möglich, die Wandungen des Verstärkungselements so auszubilden, daß sie sich sehr gut an die Wandung des Fußprofils anlegen. Dies wirkt sich sehr vorteilhaft auf die Festigkeit des Fußes aus.

Sehr vorteilhaft ist eine Ausführungsform der Erfindung, bei der das Verstärkungselement an seinen beiden Enden Montagelaschen aufweist, welche eine Öffnung aufweisen, mittels der das Verstärkungselement mit den Fußplatten verschraubbar ist. Hierdurch wird einerseits eine sehr feste Verbindung des Verstärkungselements mit den Montagelaschen erreicht, und andererseits läßt sich das Verstärkungselement hierdurch bei der Montage des Fußes mit dem Fuß verbinden.

Sehr vorteilhaft ist des weiteren eine Ausführungsform der Erfindung, bei der das Verstärkungselement Löcher aufweist, mittels welcher es mit dem Fußprofil fest verbindbar ist. Die Befestigung kann mittels Schrauben oder Nieten erfolgen.

Wenngleich es auch sehr vorteilhaft ist, das Verstärkungselement mittels Schrauben oder Nieten fest mit dem Fußprofil beziehungsweise den Fußplatten zu verbinden, so kann das Verstärkungselement auch auf andere Weise wie beispielsweise Kleben oder Schweißen fest mit dem Fußprofil beziehungsweise den Fußplatten verbunden werden.

Bei einer weiteren besonderen Ausführungsform ist vorgesehen, daß das Fußprofil eine Ausnehmung aufweist. Durch die Ausnehmung wird das Gewicht des Fußes erheblich verringert. Die Ausnehmung ist möglich, da die Stabilität des Fußes durch das Verstärkungselement gewährleistet ist.

Durch die erfindungsgemäße Ausbildung des Fußes ist es möglich, einheitlich eine leichtere Ausführungsform des Fußes herzustellen und am Lager zu halten. Sofern ein Fahrgastsitz mit einem Sicherheitsgurt montiert werden soll, wird der Fuß lediglich um ein Verstärkungselement ergänzt.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: einen erfindungsgemäß ausgebildeten Fuß mit separatem Verstärkungselement,
- Figur 2: den in Figur 1 dargestellten Fuß mit eingesetztem Verstärkungselement, und
- Figur 3: den in Figur 2 dargestellten Fuß im Schnitt entlang der Linie A-A.

Wie sich den Figuren entnehmen läßt, weist ein erfindungsgemäßer Fuß ein Fußprofil 1 auf, an welchem oben und unten Fußplatten 2, 3 angeordnet sind. Die Fußplatten 2, 3 weisen Öffnungen 9, 10 auf, mittels welcher der Fuß auf dem Boden eines Busses befestigbar ist beziehungsweise mittels welcher das Sitzuntergestell eines Fahrgastsitzes auf dem Fuß befestigbar ist. Das Fußprofil 1 ist an seinen beiden Seiten abgewinkelt. Des weiteren weist das Fußprofil 1 eine Ausnehmung 7 auf, wodurch sich das Gewicht des Fußprofils 1 verringert. Die Fußplatten 2, 3 sind mit dem Fußprofil 1 verschweißt.

Ein winkelprofilförmig ausgebildetes Verstärkungselement 4 weist an seinem oberen und unteren Ende Montagelaschen 5, 6 auf. Die Montagelaschen 5, 6 weisen Öffnungen 5a, 6a auf, welche mit den Öffnungen 9, 10 der Fußplatten 2, 3 korrespondieren, und mittels welcher das Verstärkungselement 4 mit den Fußplatten 2, 3 verschraubbar ist. Des weiteren weist das Verstärkungselement 4 Löcher 8 auf, mittels welcher es mit dem Fußprofil 1 verniet- oder verschraubbar ist.

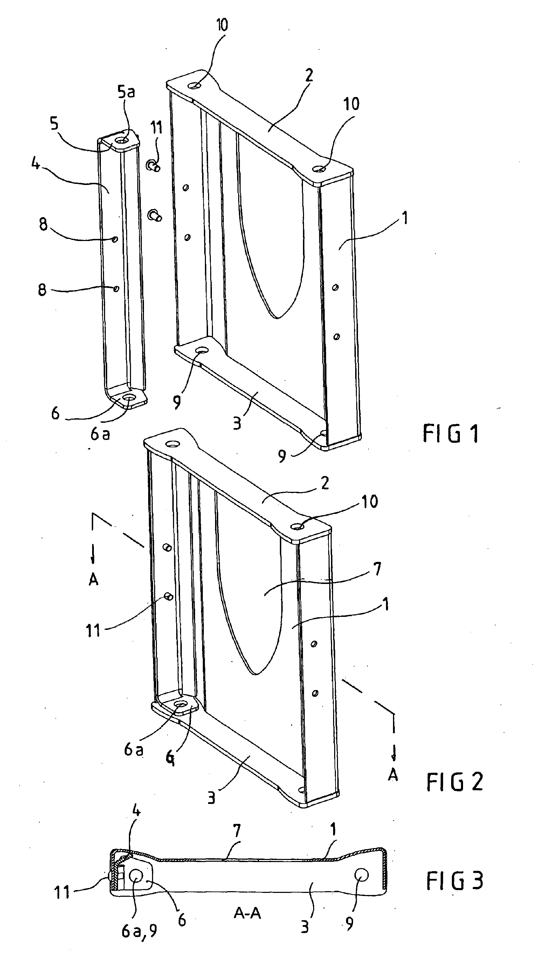

Das Verstärkungselement 4 besteht aus einem Blech, welches abgewinkelt worden ist. Das Blech kann so abgewinkelt sein, daß sich das Verstärkungselement 4 an den abgewinkelten Bereich des Fußprofils 1 anschmiegt. Wie insbesondere den Figuren 2 und 3 entnommen werden kann, ist das Verstärkungselement 4 mittels Nieten 11 mit dem Fußprofil 1 fest verbunden.

Durch das Verstärkungselement 4 ist es nicht nur möglich, daß in dem Fußprofil 1 die Ausnehmung 7 ausgebildet sein kann, sondem die Dicke des Fußprofils 1 läßt sich beispielsweise auch noch von bisher etwa drei Millimeter auf etwa ein bis zwei Millimeter reduzieren. Des weiteren läßt sich die Dicke der Fußplatten 2, 3 von etwa sechs Millimeter auf etwa vier Millimeter verringern. Die hierdurch erhaltene erhebliche Gewichtsreduzierung wirkt sich sehr vorteilhaft auf die Kosten aus.

## Patentansprüche

1. Fuß für einen Fahrgastsitz eines Personenbeförderungsfahrzeugs, insbesondere eines Busses, mittels welchem das Sitzuntergestell des Fahrgastsitzes auf den Boden des Personenbeförderungsfahrzeugs befestigbar ist, mit einem Fußprofil (1), welches sich im eingebauten Zustand etwa senkrecht zwischen Sitzuntergestell und Boden erstreckt, und an welchem an zwei gegenüberliegenden Seiten Fußplatten (2, 3) angebracht sind, zur Befestigung des Fußes am Boden beziehungsweise zur Befestigung des Sitzuntergestells am Fuß,
**dadurch gekennzeichnet,**
**daß** wenigstens an einer Seite, an der keine Fußplatte angeordnet ist, ein Verstärkungselement (4) angeordnet ist, welches sich zwischen den Fußplatten (2, 3) erstreckt.

2. Fuß nach Anspruch 1,
**dadurch gekennzeichnet,**
**daß** das Verstärkungselement (4) fest mit den Fußplatten (2, 3) verbunden ist.

3. Fuß nach Anspruch 1 oder 2,
**dadurch gekennzeichnet,**
**daß** das Verstärkungselement (4) fest mit dem Fußprofil (1) verbunden ist.

4. Fuß nach einem der Ansprüche 1 bis 3,
**dadurch gekennzeichnet,**
**daß** das Verstärkungselement (4) winkelprofilförmig ausgebildet ist.

5. Fuß nach einem der Ansprüche 1 bis 4,
**dadurch gekennzeichnet,**
**daß** das Verstärkungselement (4) an seinen beiden Enden Montagelaschen (5, 6) aufweist, welche eine Öffnung (5a, 6a) aufweisen, mittels welcher das Verstärkungselement (4) mit den Fußplatten (2, 3) verschraubbar ist.

6. Fuß nach einem der Ansprüche 1 bis 5,
**dadurch gekennzeichnet,**
**daß** das Verstärkungselement (4) Löcher (8) aufweist, mittels denen es mit dem Fußprofil (1 ) verschraub- oder vemietbar ist.

7. Fuß nach einem der Ansprüche 1 bis 6,
**dadurch gekennzeichnet,**
**daß** das Fußprofil (1) eine Ausnehmung (7) aufweist.
